# EUROPEAN PATENT APPLICATION

(11) **EP 4 502 034 A1**
(43) Date of publication of application: **05.02.2025**
(21) Application number: 23189017.9
(22) Date of filing: 01.08.2023
(51) Int. Cl.: C08L 1/02, C14C 3/06, C14C 3/10, C14C 3/20, C14C 3/22, C14C 3/28, C14C 1/08, C14C 9/02

(54) **COMPOSITIONS AND PROCESSES FOR PREPARING LEATHER INCLUDING BIOPOLYMER PARTICLES**

(71) Applicant: TFL Ledertechnik GmbH, 79618 Rheinfelden (DE)
(72) Inventor: KIENTZ, Eric, 68480 Ferrette (FR)
(74) Representative: Mertzlufft-Paufler, Cornelius

(57) **Abstract**

The invention relates to a tanning and/or retanning process for leather or a leather intermediate, comprising the steps of A tanning and/or retanning process for leather or a leather intermediate, comprising the steps of
a)
(i) tanning after a pre-treatment step and/or
(ii) retanning after (ii.1) a pre-treatment step or (ii.2) with a parallel or (ii.3) subsequent treatment step,
wherein the treatment or pre-treatment steps comprise adding to the leather intermediate in an aqueous medium a composition containing biopolymer microbeads in form of an aqueous dispersion or a dry powder, having a particle size, determined by laser diffraction based on volume density, with a Dv(90) in the range from 1 to 500 pm;; and
b) working up and drying the resulting wet leather.

## Description

### Summary of the Invention

The invention relates to a tanning and/or retanning process for leather or especially a leather intermediate, comprising the steps of
a)
   (i) tanning after a pre-treatment step and/or
   (ii) retanning after (ii.1) a pre-treatment step or (ii.2) with a parallel or (ii.3) subsequent treatment step,
   wherein the treatment or pre-treatment steps comprise adding to the leather intermediate in an aqueous medium a composition containing biopolymer microbeads in form of an aqueous dispersion or a dry powder, having a particle size, determined by laser diffraction based on volume density, with a Dv(90) in the range from 1 to 500 µm; and
b) working up and drying the resulting wet leather.

The invention in other embodiments also relates to correspond-ding use of said biopolymer microbeads before one or more steps comprising tanning leather or especially retanning tanned or pre-tanned leather; leather obtainable by said process or use; and the use of said leather as buffed or full-grain or as split leather for automotive or other land craft related purposes, aircraft, watercraft, furniture, glove, shoe, bag, wallet, suitcase, garment, lining and/or upper leather articles. Detailed invention embodiments are described below.

The biopolymer microbeads can, for example, be shown to enter voids (such as veins) in the leather precursors (intermediates) and the resulting leather - they on their own are not expected to have a tanning effect. This is a possible explanation for the features (including more homogenous thickness, texture and structure) of the leathers obtained, while the explanation is not supposed to be binding or the only possible explanation.

### Background of the Invention

Many undesired properties may affect the usefulness of leathers for the customer. Among them are inconsistent color and texture, poor strength and durability, the presence of defects, incorrect sizing and shape as well as chemical damage. Furthermore, a lack of evenness may be an issue, which may be caused by hollow parts in the original skin material.

During tanning and retanning, collagen fibres in animal hides (skins) are cross-linked in order to prevent bacterial or fungal and mechanical degradation. Customary tanning agents are e.g. chromium based tanning,(chrome tanning), mineral tanning e.g. with aluminium, zirconium or (moreover) iron based tanning agents, such as chrome sulfate, aldehydes, such as glutardialdehyde, vegetable tanning agents or synthetic tanning agents ("syntans"); or less frequently zeolite-based tanning, "tawing" agents, tanning with unsaturated oils as tanning agents or "brain tanning".

It is known to make use of hollow synthetic microspheres, e.g. copolymers of acrylonitrile/vinylidene chloride/methacrylester, for example as described in EP 2 079 853 B1 or in WO 2015/011272 A1 on expanded hollow microspheres. The microsphere materials are lightweight fillers with very low density.

The mentioned publications (from TFL and Lanxess) make use of synthetic microspheres in processes for leather tanning and/or retanning. The hollow microspheres are based on acrylonitrile-co-vinylidene chloride - co- methacrylester polymers which are synthesized on the basis of crude oil. The copolymers are not biodegradable and can be classified as micro-plastics. Their use in different industrial applications (i.e., in the leather industry) has become more and more questionable and ecologically undesirable, see ECHA, *Intentionally-added microplastics: annex XV Restriction report, dossier proposing restrictions of the manufacture, placing on the market or use of a substance within the EU,* ECHA, Ed, August **2019.**

In addition, acrylonitrile and vinylidene chloride are quite toxic monomers and are classified as carcinogenic (CMR).

The hollow microspheres are commercially provided in unexpanded or expanded form. In the patent EP 2 079 853 B1, unexpanded forms are used and expanded during leather treatment whereas in patent EP 3 024 950 B1, expanded forms are used as selective filling agent avoiding the sensitive heating step. The expanding agent is a flammable alkane (normally isobutane) and is required to expand the hollow microspheres by heating. It remains in the product also after expansion.

In many cases, an inflation of IBC (large bulk containers with 1000 l) filled with a formulation based on hollow microspheres could be observed due to isobutane diffusion through the particle walls.

Furthermore, the handling of light weight hollow microspheres is also difficult, due to the very low true density of the products. This may result in a propensity of the materials to form dust and fly around. This drawback has been solved partially by selling products as wet cake, resulting in facilitated handling. Still, some dried powder becomes airborne at the workplaces (e.g., tanning drums, formulation reactors), leading to loss of material.

In addition, the very low density also makes formulation with other ingredients like polymer dispersions quite difficult. If an acceptable stability can be achieved with a formulation containing only hollow microspheres, thickener and water, a formulation based on such hollow microspheres and, for example, standard acrylic polymer dispersion cannot be stabilized even by increasing viscosity with addition of thickeners.

Finally, no further functionalisation (e.g., by reaction with epoxides, aldehydes of isocyanates) of the mentioned hollow spheres is possible.

The mentioned drawbacks (environmental issues, potential toxicities and IBC inflation due to isobutane evaporation etc.) should essentially be avoided, and there is a need to have green alternative materials for treatment before or during tanning and/or retanning. This constitutes the problem of the invention.

EP 1 562 562 B1 describes the use of cellulose microbeads to make the skin matt, that is, for cosmetic purposes. EP 4 116 357 A1 describes a method to produce resin beads based on cellulose acetate, more especially cellulose acetate proprionate, for cosmetic purposes with improved tactile impression and good spreading out on the skin.

In the case of polysaccharide and especially cellulose, particle production comprises three main steps, (i) dissolution of cellulose polymer in a solvent or solvent mixture to form a solution, (ii) shaping of the solution into spherical or quasi-spherical particles and (iii) sol-gel transition and solidification of the particles. A complete review of particle preparation and characterization is given by M.Gericke et al, Functional Cellulose beads : Preparation, Characterization and Applications, Chem. Rev. 2013, 113,4812.

More recently, WO 2021/198688 A1 "Biopolymer particle preparation", and J.C. Obrien et al., ACS Sustainable Chem. Eng. 2017, 5, 5931-5939, describe the preparation of polysaccharide particles using membrane emulsification. C. Callaghanet et al., Continuous production of cellulose microbeads by rotary jet atomization, J. Coll. Intern. Sci., 627 (2022), 1003-1010 describe the manufacture of Cellulose particles using rotary jet atomization.

Furthermore, in continuous effort to avoid intentionally added micro-plastics, a process employing biodegradable silk fibroin has been developed by Massachusetts Institute of Technology (MIT) and BASF researchers described in WO 2023097310 A1, *Tunable structure of biodegradable silk microcapsules for soluble and insoluble payload delivery.* They were able to create nano to micrometer sized silk-based microcapsules having different morphologies and structures from smooth hollow to crumpled hollow as described also in Small, Microencapsulation of high content actives using biodegradable silk materials, 2022,18,2201487.

Cellulose microbeads are also highly interesting materials for the replacement of microplastic hollow microbeads in many industrial applications and in particular in leather goods due (1) to their high sustainability and (2) to their fair to good biodegradability. T.Goto et al, The IFSCC Congress 2020 Yokohama have measured the biodegradability of cellulose microbeads having particle sizes from 4 to 13 µm. According to method OECD301F (test of aerobic biodegradation of solutions measuring the oxygen consumption during degradation), the biodegradation after 28 days was found to be 67% and according method ASTM D6691-17 (evaluating the aerobic biodegradability of plastic materials using seawater as inoculum) the biodegradation after 28 days was found to be 93%.

### General Disclosure of the Invention

The development of new techniques to form, shape and functionalize biopolymer (especially polysaccharide and polypeptide) microbeads has expanded their applications in the field of chromatography, drug release, antibody adsorption, cosmetic and coating formulations. None of the patents and literature papers given below describe the use of biopolymer beads in leather applications.

For the first time, it has now been found and supported by evidence that microbeads of biopolymers, especially in compact form without porosity (according to microscopic sections), moreover also when bearing functional groups and/or having internal porosity, especially polypeptide or more especially polysaccharide and preferably cellulose microbeads, can also penetrate the empty voids or veins of the leather during or especially before tanning or retanning process(es) and can provide improvements, e.g., with regard to leather haptics and leather fullness in the flanks. In some case, improvement was evaluated even better than for synthetic hollow micro beads, while especially no detrimental effect on leather fastness properties like light and heat resistance, emissions and odor was found.

Such biopolymer microbead materials, due to their higher true and bulk density, allow to avoid the mentioned drawbacks. Biopolymers with their functional groups (e.g., hydroxyl groups) allow for functionalization by derivatization with, e.g., epoxides, aldehydes, ketones or isocyanates, thus allowing for more flexible and special tanning/retanning composition design. See for example, K.Uchiyama et al., Quarternization of Porous Cellulose Beads and Their Use for Removal of Humic Acid from Aqueous Medium, Physchem 2023, 3(1), 61-76.

Thus, the use of microbeads of biopolymers allows to remedy the issues of the known hollow microbeads and to establish advantages over their use in tannery.

### Detailed Description of the Invention

Different terminologies have been used in the prior art and herein, to define particles like for example beads, spheres or microspheres, pellets or pearls. To avoid confusion, instead of using the terms particles, beads or sphere materials within the definitions of the present invention the term biopolymer microbeads is used, especially A) having a particle size, determined by laser diffraction based on volume density Dv(90) (measurement described in more detail below) in the range from 1 to 500 µm, B) having spherical or quasi-spherical shape, C) being composed exclusively of (I) at least one polysaccharide; or (II) at least one polypeptide or protein; or (III) a mixture of (I) and (II).

In a first embodiment, the invention relates to a tanning and/or retanning process for leather or a leather intermediate, comprising the steps of
i) tanning after a pre-treatment step and/or (ii) retanning after (ii.1) a pre-treatment step or (ii.2) with a parallel or (ii.3) subsequent treatment step
wherein the treatment or pre-treatment steps comprise adding to the leather intermediate in an aqueous medium a composition containing biopolymer microbeads in form of an aqueous dispersion or a dry powder, having a particle size, determined by laser diffraction based on volume density, with a Dv(90) in the range from 1 to 500 pm;; and
b) working up and drying the resulting wet leather

In a preferred second embodiment, the invention relates to a process according to the preceding paragraph, wherein the biopolymer (forming the microbeads) is a polypeptide or a polysaccharide, more preferably a polysaccharide, like for example starch, cellulose, chitin, chitosan or glycogen. More preferably the biopolymer is starch or cellulose, most preferably cellulose (in the latter case the third invention embodiment).

A further fourth embodiment of the invention relates to a process according to any one of the preceding paragraphs, wherein biopolymer, especially cellulose or other polysaccharide, microbeads used are obtainable or are or have been obtained by a manufacturing process comprising some as already described above, especially by
A) (i) a **membrane emulsification** of a dispersed phase into a continuous phase, wherein the dispersed phase comprises the biopolymer educt, preferably selected from the group comprising of polypeptides or polysaccharides, in a solvent, and whereby passing the dispersed phase through the membrane forms an emulsion of the polysaccharide in the continuous phase, and (ii) a phase inversion with an anti-solvent to form biopolymer microbeads as used in the invention embodiments; especially a process as described in J.C. Obrien et al., ACS Sustainable Chem. Eng. 2017, 5, 5931-5939 or especially in WO 2021-198688 A1 "Biopolymer particle preparation"; or moreover any other process, such as
B) by **rotary jet atomization** (RJA) like (i) supplying a polysaccharide, preferably cellulose solution into a rotating vessel at high speed, flying the small droplets of the cellulose through outlets formed in the rotating vessel and under a centrifugal acceleration of 10 to 1000 G to form droplets and capturing the droplets with a coagulating solution to coagulate the droplets having average particle sizes matching those defined for the biopolymer microbeads used in the invention according EP 0850979 B1 or (ii) as described more recently by C. Callaghan et al., in J. Colloid and Interface Science 627 (2022), pages 1003-1010 using pressurized air to force a cellulose solution through a 3D printed rotating multi-nozzle device generating jets of cellulose solution which break up to give droplets. Such formed cellulose droplets are subjected to phase inversion in an anti-solvent bath thus forming particles having average particle size of 40 to 500 µm with narrow particle size distribution. Authors claim this process does not need the use of cellulose emulsion to form droplets, thus simplifying the beads and anti-solvent recovery and producing beads with sizes not obtainable with other existing methods.
C) by a **single channel extrusion** process, comprising the steps, (a) forming a homogeneous cellulose solution by dissolving cellulose fibres into the ionic liquid 1-allyl-3-methylimidozoium chloride, (b) extruding this solution through a syringe needle nozzle of well-defined diameter and (c) precipitating the cellulose into an anti-solvent like ultrapure water. Final cellulose beads exhibit high porosity and are useful as drug delivery carrier. More detailed results about this method can be found in L.K.Voon et al, Highly porous cellulose beads of controllable sizes derived from regenerated cellulose of printed paper wastes, Material Letters,164,2016,264-266. A new method using the single channel extrusion CONTINUOUS process is described in EP 3 986 092 A1. It can provide spherical cellulose beads with variable porosities and having particle size from 10 to 500 µm and more preferably from 20 to 200 µm.
D)in case of silk protein as already mentioned, by using (i) **retrofitting spray drying** method which includes, (a) making a silk fibroin aqueous solution, (b)feeding and atomizing the solution into a drying chamber to obtain droplets and (c) drying such droplets to get microcapsules or (ii) **spray freeze drying** technique which includes (a) making a silk fibroin aqueous solution, (b) feeding and atomizing the solution into a cold fluid to get frozen droplets and (c) drying such droplets to get microcapsules. The manufacturing processes can be found e.g. in WO 2023097310 A1 or in Small, Microencapsulation of high content actives using biodegradable silk materials, 2022,18,2201487.

The manufacturing process as mentioned can also be regarded as providing merely a disclosure for reference purposes, providing a description how biopolymer microbeads useful according to the invention can be obtained.

A further fifth advantageous invention embodiment of the invention relates to a process according to any one of the first to fourth invention embodiments wherein the biopolymer microbeads, especially polysaccharide microbeads, are spherical or quasi-spherical, e.g. elliptical, in shape, have a Dv(90) size, determined by laser diffraction based on volume density% and (in the present disclosure always theoretically assumed as calculation basis for the laser diffraction analysis) spherical form, in the range from 1 to 500 µm, preferably from 5 to 200 µm and more preferably from 10 to 100 µm.

A sixth particular embodiment of the invention relates to a process according to any one of the preceding embodiments, characterized in that in step a) the amount of active biopolymer microbeads, especially polysaccharide microbeads, as dry particles used is from 0,05% to 30 % or preferably to 25% or especially to 20% by weight based on the dry weight of leather or especially leather intermediate treated, preferably from 0,5% to 5,0 % by weight, more preferably from 1,0% to 3,0% by weight.

A seventh special embodiment of the invention relates to a process according to any one of the preceding embodiments, characterized in that the composition containing the biopolymer microbeads is (i) an aqueous composition having a solid or dry content of biopolymer, especially polysaccharide and/or moreover polypeptide, microbeads from 0,1 to 30 or preferably to 25 or especially to 20 % by weight, more preferably from 1,0 % to 10 % by weight or (ii) a dry composition of biopolymer (especially polysaccharide and/or moreover polypeptide) microbeads.

An eighth special embodiment of the invention relates to a process according to any one of the preceding embodiments, characterized in that, if the composition containing the biopolymer microbeads is an aqueous composition, it comprises natural or synthetic thickeners forming a three dimensional network, like for example polysaccharides, proteins, polyurethanes or acrylics. Among polysaccharides the use of sodium carboxymethylcellulose, carrageenan, alginate, pectin is preferred. Also particularly preferred is the use of alkali swellable emulsion acrylics. Typical range of concentration based on weight per total weight of microbeads is from 1,0 wt% to 30,0 wt%. This allows to obtain better sedimentation stability.

A ninth special embodiment of the invention relates to a process according to any one of the preceding embodiments, characterized in that the composition containing the biopolymer microbeads is (i) an aqueous composition or (ii) a dry composition comprising one or more biopolymer microbeads, especially polysaccharide and/or (moreover) polypeptide microbeads, of different Dv(90) size, the Dv(90) of the resulting mixture being in the range from 1 to 500 µm, preferably from 5 to 200 µm, more preferably from 10 to 100 µm. This allows to make use of mixtures of two or more biopolymer microbeads of different sizes and/or chemical compositions in one treatment or pre-treatment.

A tenth specific embodiment of the invention relates to a process according to any one of the preceding embodiments, comprising embedding the biopolymer, especially polysaccharide and/or (moreover) polypeptide , microbeads in the leather or especially leather intermediate, especially (i) in a process step preceding a tanning, more especially in a pickle step; or (ii) especially in a process step after a tanning, more especially before, in parallel to or after a retanning step, and more especially before a fatliquoring step.

An eleventh particular invention embodiment relates to a process, according to any one of the preceding embodiments, which, before or in parallel to or after the step of treatment or after pre-treatment with (addition of) the biopolymer microbeads, comprises one or more further process steps selected from the group consisting of fleshing, preservation, curing, soaking, liming, unhairing, splitting, deliming, bating, degreasing, bleaching, pickling and pickling with agents known in the art, respectively, where the process before the addition of the biopolymer microbeads may also comprise splitting and/or defleshing with a device for doing so; especially the resulting (intermediate) product of a pickling and depickling step or of a tanning step.

A twelfth particular invention embodiment relates to the process or use according to a preceding embodiment wherein the treatment or pre-treatment step comprising addition of the biopolymer microbeads is conducted in a (preferably aqueous) dispersion, followed by a tanning and/or followed by, in parallel to or after a retanning step with a tanning and/or retanning agent selected from the group consisting of mineral tanning agents like one or more chromium agents, one or more aluminium agents, one or more titanium agents and/or one or more zirconium agents; one or more synthetic tanning agents (e.g. aldehydes, such as glutardialdehyde or its precursors, and/or sulfonyl aromatics), one or more vegetable tanning agents, unsaturated oils, one or more polymer retanning agents e.g. based on acrylate copolymers or bio based polymers other than the biopolymer microbeads, one or more softening retanning agents, one or more fatliquoring agents (especially in the case of retanning), and one or more dyeing auxiliaries.

A thirteenth particular embodiment of the invention relates to a process according to any one of the preceding embodiments, wherein, after tanning and/or retanning, the leather is treated with one or more further additives customary in the manufacture of leather, e.g., selected from the group consisting of one or more dyeing agents, one or more fatliquoring agents and moreover softening retanning agents.

A fourteenth aspect of the invention relates to the use of a dry or aqueous composition comprising biopolymer microbeads, especially polysaccharide microbeads, as defined in any one of embodiments one to twelve, especially one to seven, in a process for making tanned or re-tanned leather, especially according to a process defined in said embodiment(s).

A fifteenth invention embodiment relates to a leather, especially final leather, obtainable or obtained by a method comprising a process or use according to any one of the preceding embodiments. Especially, in a more specific variant of the fifteenth embodiment, the leather is characterized in that it comprises the biopolymer, especially polysaccharide and/or moreover polypeptide, microbeads in embedded form.

A sixteenth invention embodiment relates to the use of a leather according to the fourteenth or fifteenth invention embodiment as buffed or full-grain or as split leather for automotive or other land craft related purposes, aircraft, watercraft, furniture, glove, shoe, bag, wallet, suitcase, garment, lining and/or upper leather articles.

The following definitions provide preferred definitions of features mentioned, where either one or more up to all more general feature(s) may be defined in a more specific, preferred way, thus resulting in preferred invention embodiments, all permutations of which are to be regarded as disclosed here. This also includes the pickled material (skin or hide) or a pre-tanned skin or hide.

Where **a leather intermediate** is referred to, this relates to an animal skin or hide in the form of an intermediate product in various treatment steps somewhere in the middle of a leather manufacturing process from the starting hide/skin to final leather during a tannery process, other than the final leather (especially the dried form thereof) obtained in said sequence of steps. Examples are, before tanning, a pickle hide or in the case of further retanning a fully tanned and retanned leather also named "crust". The term "leather", on the other hand, especially refers to the leather obtained after finishing.

The term "treatment" or "pre-treatment" does not exclude that rests of biopolymer microbeads may also be present in a subsequent step, e.g., during tanning or retanning, e.g. in trace amounts, although they then are not expected to integrate into the treated leather/leather intermediates, though this still may take place.

A preferred variant in all invention embodiments relates to the treatment of a pickle intermediate with biopolymer microbeads of the invention.

Where "moreover" is used, this means that the features before the feature(s) following this word are more preferred.

All types of biopolymer beads are available by methods that are known to the person skilled in the art, e.g. according to a method as disclosed when defining the fourth invention embodiment.

Cellulose beads useful according to the invention are preferably available by a process (method) for preparing biopolymer particles, comprising (a) a membrane emulsification of a dispersed phase into a continuous phase wherein the dispersed phase comprises the biopolymer in a solvent, and wherein passing the dispersed phase through the membrane forms an emulsion of the biopolymer in the continuous phase, and (b) a phase inversion with an anti-solvent to form particles of the biopolymer. The method including, prior to (b), the cooling of the emulsion to a temperature, T1, where T1 Is greater than the pour point of the continuous phase (T cont) but equal to or less than a transition temperature of the dispersed phase (Tdisp). The transition temperature of the dispersed phase is selected from the group consisting of freezing point, glass transition temperature and pour point.

T1 is especially defined as: T cont< T1 ≤ Tdisp; wherein Tdisp > Tcont.

The method is described in more detail in WO2021/198688 A1, which is preferably incorporated here by reference. For example, this document describes in the Examples: A dispersed phase comprising 8 wt% cellulose in 70 wt% 1-ethyl-3-methylimidazolium acetate and 30 wt% dimethyl sulfoxide was prepared according to routine methods known in the art. This dispersed phase had a transition temperature (e.g. freezing point) of approximately 11 °C. An aqueous continuous phase was also prepared according to routine methods known in the art. The continuous phase had a pour point of -15°C. The dispersed phase and continuous phase were fed into a membrane emulsification unit as shown in Figure 4 in said document and an emulsion thereby formed. The emulsion was then cooled to a temperature between 0 and 11 °C before being transferred into a phase inversion unit with an ethanol anti-solvent to form cellulose particles. Cooling of the emulsion was carried out with an immersed coil heat exchanger, as shown by the inset figure of Figure 4 in said document. The immersed coil heat exchanger was chosen to maintain a laminar flow and minimise flow disturbances as the emulsion cooled. The coil heat exchanger contained a length (L) of coiled tubing with diameter D and pitch P, in a cold water bath at 0°C and was sufficient to cool a 0.5 L/min emulsion to below 11 °C. The temperature of the emulsion was monitored with a thermometer at the exit of the coil heat exchanger.

The invention embodiments are also defined in the claims which are to be regarded as included here.

Measurement with laser diffraction is to obtain results based on volume density, with a Dv(90) in the range from 1 to 500 µm; the measurements were performed on liquid dispersions as given in the examples, thermostat-controlled at 25°C using a Malvern Mastersizer 3000 device (Malvern Panalytical Ltd., Malvern, UK), configured Hydro EV using a 250 ml beaker.

The protocol used to calculate particle size was based on MIE's light diffraction theory taking refractive index of 1,330 for pure water and 1,470 for cellulose polymer. In order to measure a large range of particle sizes, the device is equipped with two (one red and one blue) laser lights which are used sequentially. As light scattering by large particle size is obtained by red light at small angles, light scattering by small particles (less than 100 nm) is provided by the blue light at large angles.

For working up and drying the wet leather after a final tanning or retanning step, one or more of the following steps may be employed: The leather may be processed according to otherwise (that is, as far as the treatment with the biopolymer microbeads according to the invention is novel over these processes) customary tannery processes involving processes from the group consisting of pH adjustments, mechanical operations like washing, horsing, staking, buffing, drying (e.g. dry hanging), milling, toggling, splitting etc., coloring, fatliquoring, and the application of a coating such comprising for example polyacrylate polyacrylate binders, polyurethanes, polybutadienes, casein, nitrocellulose lacquers, pigments, dyes, silicones, matting agents, crosslinkers and any other components commonly used in the finishing of leather. The coating may, e.g., be applied by spray application, reverse roller coating, transfer coating, curtain coating, padding and the like.

Definition of percentages is based on weight % if not defined otherwise.

The manufacture of leather customarily, as in the case of the present invention, is conducted as follows and comprises steps selected from those mentioned in the following:
Normally, the steps to obtain a leather comprise several stages.

Preservation or Curing: Here the hides/skins can be treated with salt. E.g., they can be treated by dry salting or by wet-salting or soaking in saltwater brine for several hours, and the (normally dried) product can then be used for storage or transport.

The next steps prior to the tanning are typically conducted in the so-called "beamhouse" (also referred to as "beamhouse operations" herein).

These steps typically include (the sequence and process steps actually used may vary):
I. Soaking and washing in water by use of softening auxiliaries (e.g., antibacterials or antifungal agents) or washing agents or brighteners (bleaching agents). The purpose of this step includes the removal of any excess salt or dirt.
II. Fleshing: This includes the removing of any scraps of flesh from the skins, e.g., with knife or fleshing devices (e.g., including scraping rolls or blades). Optionally, the war hides are splitted.
IV. Liming: This includes soaking the hides in a pit or drum especially in the presence of milk of lime; this results in the removal of some of the fat and grease as well as hair and keratin. It helps splitting the fibre bundles and removing hair, and it helps remove undesired epidermis, affects the hair roots and removes soluble proteins.
V. Unhairing: This removes the hairs with unhairing agents, such as bases (e.g., sodium hydroxide) or sulfides (such as calcium hydrosulfide). The hair may then be removed, e.g., with a machine or by hand using a (preferably dull) knife.
VI. Deliming: In this step the alkalinity of the hides after liming is diminished by using acids (e.g., organic acids that form soluble complexes with lime; or sulfuric acid), resulting in an acidic pH.

VII: Bating (optional): This includes the addition of enzymes to the hides, e.g., to make them softer. This helps to relax and flatten elastin fibres.

VIII: Degreasing: This serves to remove fats and grease, e.g., by means of solvents or solvent-based systems.

IX: Pickling: This includes opening the skins up with water, salts (e.g., sodium chloride) and acids - this step is important to prepare the collagen for maximum permeation by the tanning agents in the tanning stage. Pickling is normally only necessary in the case where chrome tanning is intended.

The beamhouse operations are followed by the actual tanning process (sometimes also referred to as taking place in the "Tanyard").

The tanning process cross-links the collagen fibres in hides or skins (a leather intermediates) and is essential for the stability of the final leather. The result is that the hides do not putrefy and are in a status for further treatment leading to final leather and products thereof.

There are many know processes and agents for tanning:
Customary tanning methods and agents are, e.g., chromium based tanning, (chrome tanning), e.g. with chrome sulfate, mineral tanning e.g. with aluminium, zirconium or (moreover) iron based tanning agents, (especially two- or higher functional) aldehydes, such as glutardialdehyde, vegetable tanning agents (mainly including polyphenols such as tannins) or synthetic tanning agents ("syntans"); or less frequently zeolite-based tanning, "tawing" agents, tanning with unsaturated oils as tanning agents.

Chrome tanning, a very customary method, includes soaking the leather intermediate to be tanned in baths containing acidic salts until they are ready for the step of chrome tanning. The process includes chromium(III) tanning agents (e.g., the sulfate), and the acidity of the bath is normally decreased until the leather intermediate starts absorbing the chromium agents. This results in the intermediate product known as "wet blue".

Vegetable tanning can be achieved by means, e.g., of tannins from the bark and leaves of trees and plants. It often involved stepwise tanning with progressively more concentrated or different vegetable tanning agents. This process allows to maintain many of the features of the hide, e.g., the fibres of the animal hide may be preserved.

The tanning of skins and hides with animal fats and oils is a very old method and involves, for example, soap, claw oil yak butter or egg yolk.

Brain tanning is sometimes practiced by hunters - many animals have sufficient acids to tan their own hides, e.g., deer, moose and elk. The step of tanning here includes mashing brain in water and applying it by rubbing it to the hide, followed by a smoking step.

Synthetic tanning (often in combination with vegetable or chrome tanning) involves the use of synthetic chemicals such as aldehydes (e.g., di-aldehydes, such as glutardialdehyde, or moreover of formaldehyde), sulfonated or carboxyl group carrying aromatics (e.g., phenols or polyphenols), or acrylates.

Zeolite-based tanning is another more recent option.

Preferred variants of tanning employ the following:
Tanning agents can be selected from the group consisting of inorganic and/or organic, natural and/or synthetic tanning agents such as, for example, chromium salts or syntans, resin type tanning agents, polymeric tanning agents or vegetable type tanning agents.

Inorganic tanning agents used are, for example, chromium(III) salts, but also aluminium, zirconium and, moreover, iron salts.

Synthetic tanning agents used include for example: condensation products of sulfonated aromatics with aldehydes and/or ketones and optionally yet further with urea and/or its derivatives and optionally unsulfonated aromatics. Sulfonated aromatics include for example: naphthalenesulfonic acid, phenolsulfonic acid, sulfonation products of ditolyl ether, of biphenyl, of terphenyl, and also 4,4'-dihydroxydiphenylsulfone and/or benzene- and also toluenesulfonic acid. By aldehydes and/or ketones are meant aliphatic, cycloaliphatic and aromatic types, preference being given to aliphatic ones, while particular preference is given to formaldehyde and also its low molecular weight analogues. The unsulfonated aromatics are phenol, ditolyl ether, dihydroxytolyl ether, dihydroxyditolyl sulfone and furthermore hydroxybenzoic acid. Useful urea derivatives include melamine, dimethylolurea and/or guanidine.

Further synthetic tanning agents are for example condensation products of ditolyl ether sulfonic acid and 4,4'-dihydroxydiphenyl sulfone, or condensation products of sulfonated naphthalene and sulfonated phenol or 4,4'-dihydroxydiphenyl sulfone with formaldehyde or cocondensates of sulfonated ditolyl ether, sulfonated phenol, urea and phenol with formaldehyde.

Resin type tanning agents are preferably polycondensation products of melamine, dicyandiamide, urea, ligninsulfonate with formaldehyde or glutaraldehyde.

Vegetable type tanning agents are plant derived and include, for example, chestnut extract, mimosa, tara and quebracho. Other vegetable type tanning agents are obtained from plants or plant parts such as fruits, for example olives, or rhubarb, or leaves, rinds, roots, woods by extraction or by chemical and/or enzymatic modifying processes.

Polymer retanning agents can be selected from acrylic copolymers of acrylic acid and natural polymers.

Auxiliaries may be fatliquoring agents available as commercial products based on animal fats like for example fish oil, lard oil or lanolin, vegetable fats like for example castor oil, coconut oil, olive oil or lecithine, synthetic fatliquors like for example chloro or sulfochloro paraffin or synthetic fatty acid esters or mineral oil, or mixtures thereof. All these products are well known for a person skilled in the art.

After the tanning, further steps may be conducted to yield the final leather. These may include one or more selected from the following steps:
(A) Drying: Once the hides absorb all the tanning solutions and treatments it needs to dry. There are generally two ways to dry the leather. This method may be called wringing. Basically the excess moisture is squeezed out of the leather with large, heavy rollers. Another way is to dry using vacuum suction and/or on racks. After the leather is dry the next step may follow.
(B) Splitting: In order to turn leather into different products, it must be of the right thickness. For example, leather gloves and wallets require thin leather. Bags and saddles on the other hand require thicker leathers. So normally there is a need to split leather. This also makes leather easier to handle. Splitting comprises the "longitudinal cutting" of the leather into thinner layers. When leather is split, its different layers also have different characteristics and quality. A diagram of a leather's cross-section can help to identify the different layers and their names. They are, for example, full-grain leather, top-grain, and genuine leather to name a few. Furthermore, if an even more refined or thinner leather is desired, this can be obtained by shaving. Shaving can remove thinner layers of leather than cutting.
(C) Retanning: At this phase, the tanned hide may be considered as usable material. The purpose of retanning, however, is to refine a leather. After the first tanning session, there are still several qualities on the leather that can be influenced, such as color, softness, flexibility, pliability, and density. For efficiency's sake, retanning is preferably conducted in sequence inside a rotating drum that washes and dries the leather in-between steps.

A leather intermediate (pretanned skins), for example chrome leather ("wet blue") or wet white or a leather or skin obtained with another further tanning agent as defined in the preceding paragraphs, can be re-tanned, usually in an aqueous liquor. Pretanned skins (wet blues in the case of chrome tanning) are neutralized and are treated, for example, at a pH of from 2 to 7, in particular from 2. 5 to 6, and at from 15 to 60 °C, in particular from 25 to 55 °C, in the course of from 1 to 12 hours, with an aqueous solution of a retanning agent or agent mixture.

This treatment is carried out, for example, by drumming. The required amount of retanning agent used according to the invention is typically from 2 to 30, in particular from 5 to 25, % by weight, based on the shaved weight of the leather. The liquor ratio may, for example, be in the range from 30 to 200% in the case of pelts and from 100 to 2000% in the case of skins, based in each case on the shaved weight of the leather.

After the treatment according to one or more of the preceding processes is complete, the leather or skin is usually brought to a pH of from 2 to 8, in particular from 3 to 5, for example magnesium oxide, sodium carbonate, sodium bicarbonate or an organic acid, such as formic acid, or a salt thereof, being used for this purpose, and if necessary is treated with further tanning agents and, if desired, is dyed or fatliquored or moreover coated toward the end of the tanning process or thereafter.

The treatment may also comprise using thickening or stabilizing agents, biocides, cutting agents and other components that are customary used as formulating agents.

For retanning, any of the tanning agents can be used, especially aromatic sulfone syntans and/or chromium based tanning agents, such as chrome oxide.
(D) Fatliqoring: This applies lubricants to the leather to make is stronger and more flexible. Fatliquoring is often conducted in close connection, e.g., in parallel, with the retanning step. Fatliquoring agents are, for example, available as commercial products based on animal fats like for example fish oil, lard oil or lanolin, vegetable fats like for example castor oil, coconut oil, olive oil or lecithine, synthetic fatliquors like for example chloro or sulfochloro paraffin and synthetic fatty acid esters and mineral oil.

Retanning and fatliquoring agents can be used from 0.1% up to 40% by weight of the composition. The retannage step can optionally be followed by dyeing and final fixation with for example formic acid.

Retanning, fatliquoring and dyeing operation running time is, for example, from 0.2 h up to 24 h when the drum is let to run all the night at a temperature of 20°C to 60°C.
(E) Treatments altering the appearance: Altering the appearance of leather is a common procedure. The leather may be colored (dyeing), and/or, bleached into a wide array of looks. The most common practice is to dye leather. There are two general classifications of dye: water-soluble and oil-based. Dyeing can also be used to affect the properties of the leather. Depending on the kind of dye used, for example, its flexibility, softness, and even storage life can be adapted. There are four main types of dye, which are Acid, Basic, Direct, and Sulfur. Each type of dye offers different benefits from one another. Among most used dyes are poly-azo dyes, acid dyes, sulfur dyes and metal complex dyes.
(F) Setting and Drying:
   To ensure that the previous treatments result in an even overall finish the leather is to be set out to dry. The usual practice is to air dry the leather. To ensure that drying is uniform the leather is stretched and/or mounted on a rack to expose to airflow. However, mechanical drying is also available. This is generally done similar to *wringing* where they press the leather with large, heavy rollers to push the moisture out. Vacuum suction is likewise another viable method.

Further treatment steps lead to the Final Phase, often referred to as "finishing". This phase focuses mainly on refining the leather to a specific quality intended for a specific use. Here are some examples of different steps to apply finishing to a leather.

### (i) Conditioning

For leather to last as long as it should conditioners are applied. Conditioners help the leather retains some helpful moisture and oils that keep its fibers in great shape over time. Different types of conditioners will vary upon different types of leather.

### (ii) Staking

If it is intended is to obtain a smoother, more supple material, leather typically may go through the process of staking. Staking is, in its effect, comparable to tenderizing meat with a mallet. Machines are employed to beat the leather to soften its texture. Alternatively, this can be done manually.

### (iii) Buffing

Buffing can be included in order to achieve a leather with smoother touch. It also can give the leather a grainier look. The process of buffing usually involves sanding down the leather in a sanding drum.

### (iv) Surface Pressing

Another technique that greatly changes the appearance of leather. Surface pressing employes rollers in order to imprint a pattern into the leather. This also creates texture on the surface of the leather. A common example of surface pressing is embossing.

Properties of the leathers to be influenced by appropriate combination of the steps mentioned above and below include but are not limited to: softness (e.g. measurable with a BLC 20 softmeter), grain tightness, fullness, Color Crust, Color, Dye penetration, touch, haptics, milling break, levelness, dye levelness, Milling Break, grain break, ageing under light and/or UV light, (e.g. Xenon light ageing) or heat (heat ageing); emissions and fogging, reflectance, appearance under microscopic (e.g. SEM) examination and the like.

A very important property of leather (for which tanning and if applied retanning form the basis) is the TS: The measure of tanning is the hydrothermal stability of the leather, the so-called shrinkage temperature. This can be measured according to method DIN 53336:1977-01. The shrinkage temperature of an untanned hide is about 55 - 60 ° C. An increase above this (e.g. to 62 or especially 65°C or higher) indicates successful tanning.

The following Examples, while also representing preferred embodiments of the invention, are included for illustrative purposes and are not intended to generally diminish the scope of the invention.

### Examples of formulation of cellulose microbeads compositions

### Composition examples 1-3: dispersion in water

Into a 1000 ml beaker, 470,0 g of deionized water was charged and subjected to 200 rpm agitation.

Then, 33,2 g of cellulose microbeads powder was added slowly into the beaker. When the slurry was homogeneous, still under agitation, 20,0 g of an alkali soluble emulsion thickener (ACRYSOL ASE-60 from DOW) having 28 % dry substance was added. Finally, viscosity and pH were adjusted by adding 0,90 g of monoethanolamine.

Final dispersion was a whitish viscous turbid product having pH between 6 and 7. This is the dispersion used in laser light size determination.

All examples 1-3 were made using the same process, the only parameter which has been changed is the microbeads particle size and particle size distribution, as shown in Table 1 below.

### Compositions with mixture of cellulose beads having different particle size (see Table 1 below)

**Composition example 4:** Water-based formulation The water-based formulation was made by mixing example 1, 2 and 3 to get a broader particle size distribution. It has been obtained by mixing 22,0 wt% of example 1, 38,0 wt% of example 2 and 40,0 wt% of example 3.

The spherical or quasi-spherical polysaccharide particles from examples 1 -4 had Dv(50) and Dv(90) sizes measured by laser diffraction based on volume density% using a MALVERN 3000 as mentioned in Table 1. The measurement method is described in more detail elsewhere within this disclosure where particle sizes are mentioned.

### Composition example 5: Powder form formulation

This relates to a water free flowing powder form. It has been obtained by mixing 22,0 wt% of cellulose bead powder Dv(90) equal 121 µm with 38,0 wt% cellulose bead powder Dv(90) equal 72 µm and 40,0 wt% cellulose powder Dv(90) equal 27 µm.

### Comparative formulation made with hollow microspheres

### Composition example 6: Comparative example (non-inventive)

This refers to the example 1 described as expanded hollow microspheres slurry of patent EP 3 024 950 B1. Particle content was 3,0 wt%, the slurry having a pH between 7 and 9 and a brookfield viscosity from 2000 to 5000 mPa.s. Particle sizes measured by Laser diffraction were, respectively, for Dv (50) 22 µm and for Dv(90) 36 µm. Storage stability was fair, though an accumulation of particles on surface could be observed for samples aged several months. Nevertheless, the dispersion could be re-homogenised easily.

Table 1 below gives the example 1-6 dispersions characteristics. The dry particle concentration [wt%] in dispersion was the amount of dry particle introduced into the total amount of dispersion. Dispersion viscosity has been measured using a Brookfield viscosimeter LVT. All measures have been made at 22°C with a rate of 12 rotations per minute and a spindle n° 2 for all examples excepted example 3 for which a spindle n° 3 has been used.

**Table 1: Particle concentration and size based on volume density Dv, pH, Brookfield viscosity and storage stability of the examples 1-6.**

| | wt% dry biopolymer particle | PS Dᵥ(50) µm ⁽¹⁾ | PS Dᵥ(90) µm ⁽¹⁾ | pH @ 22°C | Brookfield viscosity ⁽²⁾ cPs @ 22°C | Storage Stability @ 22°C |
|---|---|---|---|---|---|---|
| Ex 1 | 6, 3 | 84 | 121 | 6, 7 | 2050 | Good |
| Ex 2 | 6, 3 | 49 | 72 | 6, 5 | 2425 | Good |
| Ex 3 | 6, 3 | 16 | 27 | 6, 4 | 14800 | Good |
| Ex 4 | 6, 3 | 30 | 87 | 6, 4 | 2300 | Good |
| Ex 5 | 100 | 30 | 87 | N/A | N/A | N/A |
| Ex 6 | 3, 0 | 22 | 36 | 7, 0-9, 0 | 2000-5000 | fair |

| | | | | | | |
|---|---|---|---|---|---|---|
| ⁽¹⁾ Mastersizer 3000 with Hydro EV; Refractive index of cellulose particle 1,470 (2) Brookfield viscosimeter LVT | | | | | | |

### Examples of cellulose microbeads in retanning step

### Leather material

For each set of trials, four corresponding quarter hides (wet blue) were used with a thickness between 1.4 mm and 1.6 mm. Hides were weighed. All raw material concentrations are expressed in % (weight-%) based on dry hide weight.

**Retanning process using cellulose microbeads and hollow microspheres compositions from examples 1 to 6 to make leather crust for** *haptic* **evaluation.**

### Washing, re-chroming and neutralization

The quarter hide was put into a rotating steel drum filled up with 300 % water and heated up to 30°C.

0,5% of a sulphated fatty alcohol Borron SAF (TFL Ledertechnik GmbH) and 0,3% formic acid 85% were then added and the drum was allowed to rotate for 20 minutes. At the end of this process pH value was 3.4. The aqueous solution was then removed from the drum.

150 % water was added to the drum and heated to 30°C. Then 4,0% TANNESCO HN gran (TFL Ledertechnik GmbH) containing 12.5 % chrome oxide was added and the drum and let to rotate for 40 minutes.

The hide was then neutralized by adding 2,0% Sellasol NG gran, a mixture of organic acid salts (TFL Ledertechnik) followed by the addition of 1.5% sodium formate. The drum was let to rotate for 30 min.

2.0 % of a fatliquor (mixture of sulfated and sulfonated natural and synthetic substances) CORIPOL UFB/W (TFL Ledertechnik GmbH) and 1.0% sodium formate were added to the drum which was rotated for 60 minutes. The final pH was 5.2.

The aqueous solution was then removed from drum. The hide was washed out with 200 % water at 30°C for 10 minutes.

### Retannage, dyeing and fatliquoring

80% water was added to the drum and heated to 30°C. The inventive cellulose microbeads aqueous or dry composition or hollow microsphere comparative non inventive composition, respectively, was added to the drum which was rotated for 60 minutes.

Then 8.0% of a syntan of mixed aromatic sulfone TANIGAN OS (TFL Ledertechnik GmbH) and 3.0% SELLA FAST BROWN HH dye was added successively into the drum and let to rotate slowly over night at 30°C.

Next day, 100 % water was added into the drum which was heated to 50°C. When temperature was stable, 12.0% of fatliquoring agent CORIPOL UFB/W (TFL Ledertechnik GmbH) was added and the drum was rotated for 60 minutes.

The pH was set to 3.4 with addition of 2.5% formic acid 85%.

Finally, the drum was drained, and the hide was washed twice with 200% water respectively at 40°C and 20°C.

The hide was horsed up over-night, set out and vacuum dried for 3 minutes at 60°C, hanged dry and staked before final evaluation.

**Retanning process using cellulose microbeads and hollow microspheres compositions from examples 1 to 6 to make leather crust for** *fastness properties* **evaluation.**

### Leather material

For each set of trials, four corresponding quarter hides (wet blue) were used with a thickness between 1.1 mm and 1.2 mm. Hides were weighed. All raw material concentrations are expressed in % based on dry hide weight. For fastness properties evaluation, no dyes were added during the retanning process.

### Washing, re-chroming and neutralization

The quarter hide was put into a rotating steel drum filled up with 200 % water and heated up to 35°C.

0.3% formic acid 85% was then added and the drum was allowed to rotate for 20 minutes. At the end of this process, pH value is 3.4. Aqueous solution was then removed from the drum.

150 % water was added to the drum and heated to 35°C. Then 2,0% TANNESCO HN gran (TFL Ledertechnik GmbH) containing 12,5 % chrome oxide was added and the drum was rotated for 30 minutes.

The hide was then neutralized by adding 2.0% sodium formate, and after 10 min, 2.0% sodium bicarbonate was added to the drum which was then rotated for additional 90 min. Final pH at the end of this step was 6.1. Finally the hide was washed at 40°C with 200% water for 10 minutes and the drum was drained.

### Retannage, washing and drying

The drum was then charged with 100% water and heated at 40°C. 12% SELLATAN RL (TFL Ledertechnik GmbH)- a syntan based on sulfonated phenolic compounds condensed with formaldehyde was added and the drum was rotated for 60 minutes. pH was adjusted to 4.1 with 1.5% formic acid diluted 1 to 5 with water. The hide was then washed with 200% water at 50°C and the drum was drained.

The drum was then charged with 100 % water and heated at 50°C before adding cellulose microbeads from invention or the hollow microspheres as comparison. For all compositions, the drum was rotated for 240 min. pH at the end of this process for all application examples was between 4.1 and 4.2. Finally, pH was adjusted with 1.0% formic acid diluted 1:5 into water to 3.55 for all application examples.

The hide was then washed with 200% water at 35°C followed by a second wash of 200% water at 20°C. The hide was horsed up over-night, set out, toggled dry and staked before physical testing.

### Examples of cellulose microbeads added in pickling stage

This process makes the fibres of the hides more receptive to tanning. Pickling increases the acidity of the hide to a pH of 2-3, enabling chromium salts to enter the hide. Salts like Sodium chloride are added to prevent the fibres from swelling. For preservation purposes, fungicides and bactericides can also be used.

**Pickling, chrome tanning and retanning process using inventive example 3 and comparison with non-inventive example 6.**
One fresh Italian bull hide of ca 30-35 kg was cut in 2 half which have been subjected together respectively to soaking, unhairing, liming, deliming and bating beamhouse works. The two half hides were washed 10 min twice with 85 % of water per 100 parts of hide. Each of the half hides was found to have 16 kg. Hides were subjected to respective processes: pickling then chrome tanning and finally retanning. Final haptic properties have been evaluated on crust (after retanning and drying).

Each drained half hide (100 %) was introduced into a drum which has been charged with 50 % water and 7.0 % of sodium chloride and then started to rotate for 20 minutes at 28°C. Then 2.0% of the inventive example 3 and 0.5% formic acid diluted 1:3 into water were incorporated into the drum which was left to rotate for 30 minutes. Then pH was gradually decreased to 2.0 by two successive additions of 0.55 % of sulfuric acid diluted 1:15 in water were added into the drum, left to rotate for 60 minutes after each addition of sulfuric acid. The drum was left to rotate overnight. The pH was 2.07 next morning.

The thus obtained pickled hide was then submitted to chrome tanning as follow:
0.2 % fungicide and 6,0% of CHROMOSAL B (TFL Ledertechnik AG) a basic chrome sulfate containing ca. 26% chrome oxide Cr₂O₃ were added into the drum which was left to rotate at 32°C for 180 minutes. After this step, 0.25% CROMENO FBQ-N (TFL Ledertechnik AG) composition having min 94% magnesium oxide was incorporated into the drum and left to rotate for 60 minutes at 36°C.

Then 0.25 % of CROMENO FBQ-N (TFL Ledertechnik AG) composition having min 94% magnesium oxide was added into the drum which was left to rotate at 36°C for 360 minutes and then over-night more slowly without heating. Next morning, pH was 3.6 and drum was left to rotate further for 60 minutes at 40°C. PH was 3.35 . Then 0.35 % of sodium bicarbonate was added at 40°C and drum left to rotate for 60 minutes. Final pH was 3,6.
Drum was drained and then 100 % of fresh water, added at 20°C into the drum which was left to rotate for 10 minutes.

Same process and composition have been used to make the reference hide with 1.0% non-inventive example 6.

**Pickling and chrome tanning process using inventive example 2 and comparison without cellulose microbeads.**
One fresh Italian bull hide of ca 25-30 kg was cut in 2 half which have been subjected together respectively to soaking, unhairing, liming, deliming and bating beamhouse works. The two half hides were washed 10 min twice with 200 % of water per 100 parts of hide. Each half hides were found to have 14 kg. Hides were subjected to respective processes: pickling then chrome tanning and finally retanning. Final crust haptic properties have been evaluated.
Each drained half hide (100 %) was introduced into a drum which has been charged with 40 % water, 0.5 % sodium formate and 6.5 % of sodium chloride and then started to rotate for 10 minutes. Then 0.2 % of a sulphated fatty alcohol Borron SAF (TFL Ledertechnik GmbH) was added into the drum, left to rotate for 10 min and then 1.0% of the inventive example 2 was incorporated into the drum which was left to rotate for 30 minutes. Then pH was gradually decreased to 2.5 by successive additions of respectively 0,6 % of formic acid diluted 1:3 in water, after 30 minutes pH was 3.8 then 0.6 % of sulfuric acid diluted 1:10 in water was added into the drum, left to rotate for 60 minutes and pH was 3.7 and finally a last charge to 0.6 % of sulfuric acid diluted 1:10 in water was added into the drum which was left to rotate overnight. pH was 2.5 next morning.

The thus obtained pickled hide was then submitted to chrome tanning as follows:
0.1 % fungicide and 6.0% of CHROMOSAL B (TFL Ledertechnik AG) were added into the drum which was left to rotate at 32°C for 180 minutes. After this step, final pH was 2.2.

Then 0,2 % CROMENO FBQ-N, a high quality magnesium oxide (TFL Ledertechnik GmbH), was incorporated into the drum and left to rotate for 60 minutes. pH was 3,1.

Then 40 % of water was added followed by 0.25 % of CROMENO FBQ-N. Drum was left to rotate at 40°C for 180 minutes, pH was 3,8 and then over-night more slowly. Next morning, drum was left to rotate further for 60 minutes at 40°C. pH was 3,6. Then 0.15 % of sodium bicarbonate was added at 40°C and drum left to rotate for 120 minutes. Final pH was 3.96. A quick boiling test was made test tanning quality: a piece of leather was put into boiling water for 2 minutes. Surface reduction was less than 5%. Drum was drained and then 100 % of fresh water, 0.05% BORRON SAF and 0.05 % formic acid diluted 1:3 in water were successively added at 20°C into the drum which was left to rotate for 20 minutes.

The same process and compositions have been used to make the reference hide without inventive example 3.

### Wet blue treatment after pickling and chrome tanning

All wet blue leather intermediates were subjected to sammying, a process that squeeze the wet blue hides to expel water until residual humidity was around 30-40%. The thus obtained wet blue was then ready to be split, shaved and subsequently retanned:

### Retanning

Hides were split and shaved to achieve a thickness of 1.2-1.3 mm. A retanning process has been performed using a shoe upper recipe for all examples.

### Washing and neutralization

The half hides were put into a rotating steel drum filled up with 200 % water and heated up to 35°C.

0.2% of a sulphated fatty alcohol Borron SAF (TFL Ledertechnik GmbH) and 0.2% formic acid 85% were then added and the drum was allowed to rotate for 20 minutes. At the end of this process pH value was 3.4. The aqueous solution was then removed from the drum.

150 % fresh water was added to the drum and heated to 35°C. The hides were then neutralized by adding 2.0% sodium formate. The drum was let to rotate. After 30 minutes the pH was 4.2. Then 1.0% sodium bicarbonate was added into the drum which was let to rotate for another 30 minutes. Then 2.0% of a emulsion mixture of natural and synthetic fats CORIPOL AV (TFL Ledertechnik GmbH) was added and drum was left to rotate for 60 minutes. Final PH was 5.5.

The aqueous solution was then removed from drum. The hide was washed out with 200 % water at 35°C for 10 minutes.

### Retannage, dyeing and fatliquoring

100% water was added to the drum and heated to 35°C. 5.0% of a biopolymer based on cellulose MAGNOPAL PURE A was then added to the drum which was rotated for 20 minutes followed by successive additions of 4.0% of a combination based on aromatic sulphones and natural products SELLATAN SU-V(TFL Ledertechnik GmbH, 4.0% SELLASOL BC/7 which is a sulfomethylated melamine resin, 4.0% of vegetable tanning agent based on Mimosa extract, 2.0% CORIPOL AV and 2.0% of acid dyestuff SELLA STAR DESERT. Drum was left to rotate for 90 minutes. Then drum was diluted with 50% water, heated up at 50°C and left to rotate 10 minutes before addition of 2.0% formic acid 85.0 wt % solution. After 30 minutes, pH was 3.8. Drum was then drained and fill again with 300 % water for washing at 50°C for 15 minutes.

Drum was drained again and filled up with 100 % water and heated to 50°C. When temperature was stable, 6.0% of fatliquoring agent of liquid oil based on phosphoric esters CORIPOL EF-N (TFL Ledertechnik GmbH), 2.0% of a dispersion polymer MAGNOPAL DP (TFL Ledertechnik GmbH) and 6.0% CORIPOL AV were added the drum which was left to rotate for 60 minutes. Finally, pH was adjusted to 3.3 by addition of 1.5% formic acid 85.0 wt% solution.

### Drying

Finally, the drum was drained, and the hide was washed with 300% water respectively at 25°C for 10 minutes. The hide was horsed up over-night, set out and vacuum dried for 3 minutes at 60°C, hanged dry and staked before final evaluation.

### Leather crust haptic evaluation with examples 1-5 added during retanning

### Application examples for haptic evaluation: AHR

All application examples for leather haptic evaluation were made using the same retanning process as described above. In application examples AHR1, AHR2.1 and AHR6.1 given in table 2 (effect of high particle size), 10 wt% of the inventive cellulose microbeads respectively from example 1 and 2 and 10 wt% of the non-inventive composition from example 6 was added as aqueous composition into the drum. In application examples AHR2.2, AHR3 and AHR6.2 given in table 3 (effect of low particle size), 10% wt of the inventive cellulose microbeads respectively from example 2 and 3 and 10 wt% of the non-inventive composition from example 6 was added as aqueous composition into the drum. The leather made without composition was taken as the reference for each series of application (examples AHR0.1 and AHR0.2). In application examples AHR4.1 and AHR4.2 given in table 4 (effect of particle concentration and form, respectively 10 wt% and 20 wt% of the inventive cellulose microbeads from example 4 (water-borne composition) was added into the drum. In Application example AHR5 from the same series, the particle mixture used to make example 4 was added in powder form into the drum at a concentration of 1.5wt%. The leather of application AHR6.3 using 10 wt% of non-inventive composition example 6 was taken as the reference for this series.

The leather haptics was evaluated according to an arbitrary scale of 1 to 5 with following description : 1=poor; 2=fair; 3=good; 4= very good and 5= exceptional).

**Table 2. Effect of high particle size on leather haptics**

| Composition example | 1 | 2 | 6 Comparative | Without |
|---|---|---|---|---|
| PS Dv (90) µm | 121 | 72 | 36 | |
| Application example | AHR1 | AHR2.1 | AHR6.1 | AHR0.1 |
| Dispersion wt% /dry leather weight | 10,0 | 10,0 | 10,0 | - |
| Fullness backbone | 3.5 | 3.5 | 3 | 2 |
| Fullness flanks | 2 | 3 | 3 | 1 |
| ST300 Softness | 3.8 | 4.0 | 4.2 | 3.9 |
| Touch | Silky peachy | Silky peachy | Silky peachy | Silky peachy |

Leather softness was measured by using a ST300A softness tester (RWD Bramley /BLC Research) according method ISO 17235:2015.

In this trial, leather AHR2.1 made with example 2 was found very close to AHR6.1 made with comparative non inventive example 6.

**Table 3. Effect of low particle size on leather haptics**

| Composition example | 2 | 3 | 6 Comparative | Without |
|---|---|---|---|---|
| PS Dv (90) µm | 72 | 27 | 36 | - |
| Application example | AHR2.2 | AHR3 | AHR6.2 | AHR0.2 |
| Dispersion wt% /dry leather weight | 10 | 10 | 10 | - |
| Fullness backbone | 3 | 3 | 3 | 2 |
| Fullness flanks | 2 | 2.5 | 3 | 1 |
| Softness BL""20 | 3.4 | 3.3 | 3.4 | 3.2 |
| Touch | silky | silky | silky | Silky |

In this trial, in the backbone aera, there is very little difference between the different application examples.

In the flanks area, example AHR3 made with composition of example 3 was significantly fuller than example AHR0.2 containing no composition and quite close to application example AHR6.2 made with non-inventive comparative example 6.

**Table 4. Effect of concentration and composition form on leather haptics**

| Composition example | 4 | 4 | 5 | 6 Comparative |
|---|---|---|---|---|
| PS Dv (90) µm | 87 | 87 | 87 | 36 |
| Application example | AHR4.1 | AHR4.2 | AHR5 | AHR6.3 |
| Dispersion wt% /dry leather weight | 10 a | 20 a | 1,5 b | 10 a |
| Fullness backbone | 2 | 3.5 | 3.25 | 3 |
| Fullness flanks | 2 | 3.5 | 3.25 | 3 |
| Softness BL""20 | 5.8 | 6.1 | 6.1 | 5.1 |
| Touch | waxy | waxy | waxy | waxy |

| | | | | |
|---|---|---|---|---|
| a) Water-borne dispersion; b) powder composition | | | | |

In this trial, increasing the content of cellulose microbeads from 0.63% (application example AHR4.1) to 1.50% (application examples AHR4.2) in water-borne dispersion or powder form (application example AHR5) improves the fullness of backbone and flanks compared to comparative application example AHR6.3 containing non-inventive example 6.

There is, furthermore, a non-significant difference between the water-borne composition used in application example AHR4.2 and the powder form composition used in application example AHR5.

### Some fastness and emission properties of leather crust with cellulose microbeads added during retanning

Leathers retanned comprising cellulose microbeads from example 1-5 have been tested for :
(a) odor according VDA 270 (determination of the odor characteristics of trim materials in motor vehicles version 05/2022),
(b) color change evaluated visually by using the grey scale for assessing change in color according ISO 105-A02:Oct 2005
(b1) after accelerated 144 h heat exposures at 100°C and 120°C according to the EN ISO 17228:March 2015 method and
(b2) after UV ageing after 82h and 280 h exposure to xenon lamp (having an emission wavelength profile close to day light) according EN ISO 105-B02: Sept 2014 and
(c)emissions like
(c1)fogging test according EN ISO 17071:September 2006 (method A reflectance and method B gravimetric) and
(c2)VOC/FOG values according VDA 278 thermal desorption analysis of organic emissions for the characterization of non-metallic material for automobile Oct 2011).

Results are given in the tables below, respectively, for cellulose microbeads with high particle size and with low particle size.

### Application examples for fastness evaluation: AF

All application examples for leather fastness evaluation were made using the same retanning process as described above. No dye was added during the process and leather hides have been only retanned with 12% SELLATAN RL, a syntan with excellent heat and UV fastness. In application examples AF1, AF2 and AH6.1 given in table 5 (effect of high particle size), 10 wt% of the inventive cellulose microbeads, respectively, from example 1 and 2 and 10 wt% of the non-inventive composition from example 6 was added as aqueous composition into the drum. Fastness measurements were not performed on compositions containing particle mixtures.

**Table 5. Cellulose beads having high diameters**

| | Composition example | 1 | 2 | 6 Comparative | without |
|---|---|---|---|---|---|
| Application example | | AF1 | AF2 | AF6.1 | AF0.1 |

| **Properties** | | | | | |
|---|---|---|---|---|---|
| Odor; VDA 270 | | 2.5 | 2.5 | 3.5 | 2.5 |

| *Emission fogging* | | | | | |
|---|---|---|---|---|---|
| | reflectance % | 78.0 | 74.2 | 68.4 | 62.6 |
| | gravimetric mg | 0.4 | 0.9 | 1.0 | 1.6 |

| *Xenon light ageing* | | | | | |
|---|---|---|---|---|---|
| | 20/82 h | 4.5 | 4.5 | 4.5 | 4.5 |
| | 80/280h | 4 | 4 | 4 | 4 |

| *Heat ageing* | | | | | |
|---|---|---|---|---|---|
| | 6 days @ 100°C | 4.5 | 4.5 | 4.5 | 4 |
| | 6 days @ 120°C | 4 | 4 | 4 | 4 |

### Ageing light and heat: Color change according to grey scale (1-important change in color- 5 no color change)

It can be seen leather odor according VDA270 method (1 good - 5 very bad) is better for leather retanned with cellulose particles compared to leather retanned with microplastic hollow spheres. Fogging results are also slightly better for leather retanned with cellulose particles compared to leather retanned with microplastic hollow spheres. There are also no differences between the examples with regard to heat and UV ageing, all results indicating a good behavior of cellulose particles upon ageing.

**Table 6. Cellulose beads with low diameter**

| Composition example | | 3 | 3 | 6 Comparative | without |
|---|---|---|---|---|---|
| Application example | | AF3.1 | AF3.2 | AF6.2 | AF0.2 |

| **Properties** | | | | | |
|---|---|---|---|---|---|
| *Emissions; VDA 278* | | | | | |
| | VOC (µg/g) | 26 | 28 | 32 | 49 |
| | FOC (µg/g) | 8 | 6 | 13 | 17 |

| *Emission fogging* | | | | | |
|---|---|---|---|---|---|
| | Reflectance % | 92.2 | 88.5 | 98.7 | 91,0 |
| | Gravimetric (mg) | 0.1 | 0.2 | 0.3 | 0.1 |

| *Xenon light ageing* | | | | | |
|---|---|---|---|---|---|
| | 20/82 h | 4 | 4 | 4 | 4 |
| | 80/280h | 2.5 | 2.5 | 2.5 | 2.5 |

| Heat ageing | | | | | |
|---|---|---|---|---|---|
| | 6 days @ 100°C | 4.5 | 4.5 | 4.5 | 4.5 |
| | 6 days @ 120°C | 4 | 4 | 4 | 4 |

For composition example 3 (cellulose particles having Dv (0,5) = 16 µm), emissions according VDA278 and fogging are low and as good as comparative non inventive example 6 made with microplastic hollow spheres.

### Scanning electronic microscopy (SEM) analysis of leather cross section retanned with cellulose particles.

With SEM, cellulose and microplastic particles can be observed in the cross section of the retanned leather. Analysis has been done to determine beads/particle presence, location (grain and flesh side, veins), number and size. Results for the different applications are given in the table 7 and table 8.

**Table 7. SEM analysis of leather cross-section containing cellulose beads having high diameters**

| Composition example | 1 | 2 | 6 Comparative |
|---|---|---|---|
| Application example | AF1 | AF2 | AF6.1 |
| **Spherules analysis** | | | |
| How many (1) | only a few | some spherules | large number in many parts cross-section |
| In hair follicles/veins | very seldom | seldom | visible |
| grain versus flesh | more visible in reticular layer | no clearly difference | visible in grain and flesh (reticular layer) |
| dimensions | nearly only larger spherules of ca. 50 µm | 20 to 40 µm in reticular layer, smaller one also in grain layer | 10 to 40 µm, larger one in reticular layer |

In this trial, it a higher number of synthetic microspheres in grain and reticular layer can be observed compared to cellulose microbeads (examples 1 and 2).

**Table 8. SEM analysis of leather cross-section containing cellulose beads with low diameter.**

| Composition example | 3 | 3 | 6 Comparative |
|---|---|---|---|
| Application example | AF3.1 | AF3.2 | AF6.2 |
| **Spherules analysis** | | | |
| How many (1) | some spherules ca. 50 | some spherules ca. 200 | large number of spherules ca. 300 |
| in hair follicles/veins | sometimes | visible | visible |
| grain versus flesh | no clear difference | more visible in grain | no clear difference |
| dimensions | spherules between 7 an 20 µm | spherules between 7 an 20 µm | 5 to 35 µm, larger one only in reticular layer |

In this trial with lower particle size cellulose microbeads, it can be seen more spherules present in the leather compared to higher particle size examples 1 and 2.

From these trials, it can be concluded that cellulose microbeads can penetrate the cross-section of a retanned leather. Smaller particle size beads (ca. Dᵥ (90) = 27 µm ) are more visible in the grain whereas higher particle size beads (ca. Dv (90) > 50 µm) are more present in the reticular layer.

These findings indicate a mixture of different particle size could be a better solution to get a more uniform distribution of cellulose beads in the leather cross-section.
This will be highlighted in the next table 9.

**Table 9. SEM analysis of leather cross-section after microbeads addition in retanning step. Influence of microbeads size distribution.**

| Composition example | 4 | 4 | 5 | 6 Comparati ve |
|---|---|---|---|---|
| Application example | AF4.1 | AF4.2 | AF5 | AF6.3 |
| Dispersion wt% /dry leather weight | 10% | 20% | 1,5% | 10% |

| **Spherules analysis** | | | | |
|---|---|---|---|---|
| How many (1) | some spherules ca. 250 | some spherules ca. 400 | some spherules ca. 700 | large number of spherules ca. 250 |
| in hair follicles/veins | visible | visible | visible | visible |
| grain versus flesh | more in grain layer | more in grain layer | more in grain layer | more in grain layer |
| dimensions | 5 to 35 µm, smaller one only in grain layer | 5 to 40 µm, smaller one only in grain layer | 5 to 60 µm, smaller one only in grain layer | 5 to 35 µm, smaller one only in grain layer |

In this trial, cellulose microbeads are clearly visible in grain and reticular layers. Increasing the concentration improves beads penetration into the layers. Furthermore, powder form seems more efficient than water slurry form for microbeads penetration.

### Leather crust haptic evaluation with examples 2, 3 and 6 introduced during pickle step : AHP

The wet blue haptic was evaluated according to an arbitrary scale of 1 to 5 with following description : 1=poor; 2=fair; 3=good; 4= very good and 5= exceptional).

**Table 10 : Wet blue evaluation with microbeads introduced in pickle step**

| Composition example | Ex 3 | Ex 6 | | Ex 2 | Without |
|---|---|---|---|---|---|
| Application example | AHP3 | AHP6 | | AHP2 | AHP0 |
| Veins | 2 | 2 | | 3 | 3 |
| thru tanning (%) | 100 | 100 | | 100 | 100 |
| color | light blue | light blue | | light blue | light blue |
| grain, milling uniformity | ? | ? | | 4 | 3 |
| full belly / looseness | 4 | 4 | | 4 | 3 |
| fullness on flank | 2,5 | 4 | | 4 | 3 |
| general appearance | 3 | 4 | | 4 | 3 |

After retanning, the leather crust containing the invention example 3 (AHP3) was compared to the reference hide made with non-inventive example 6 (AHP6). Leather crust made with non-inventive example 6 was found to have better flank fullness and slightly better general appearance.

After retanning, in the second series of pickle application, the leather crust containing the invention example 2 (AHP2) was compared to the reference hide made without inventive example (AHP0). Wet blue made with inventive example 2 was found to have better flank fullness, better milling break and better general appearance.

## Claims

1. A tanning and/or retanning process for leather or a leather intermediate, comprising the steps of
a)
(i) tanning after a pre-treatment step and/or
(ii) retanning after (ii.1) a pre-treatment step or (ii.2) with a parallel or (ii.3) subsequent treatment step,
wherein the treatment or pre-treatment steps comprise adding to the leather intermediate in an aqueous medium a composition containing biopolymer microbeads in form of an aqueous dispersion or a dry powder, having a particle size, determined by laser diffraction based on volume density, with a Dv(90) in the range from 1 to 500 pm;; and
b) working up and drying the resulting wet leather.

2. The process according to claim 1, wherein the biopolymer is a polypeptide or a polysaccharide, more preferably a polysaccharide, like for example starch, cellulose, chitin, chitosan or glycogen; especially wherein the biopolymer is starch or cellulose, more preferably cellulose.

3. The process according to any one of the preceding claims, wherein biopolymer educt, especially polysaccharide, microbeads used are obtainable or prepared by a method comprising
A) (i) a membrane emulsification of a dispersed phase into a continuous phase, wherein the dispersed phase comprises the polysaccharide in a solvent, and whereby passing the dispersed phase through the membrane forms an emulsion of the polysaccharide in the continuous phase, and (ii) a phase inversion with an anti-solvent to form particles of the polysaccharide; or by other methods.

4. The process according to any one of claims 1 to 3 wherein the biopolymer microbeads, especially polysaccharide microbeads, are spherical or quasi-spherical, e.g. elliptical, in shape, have a Dv(90) size, determined by laser diffraction based on volume density% and spherical form, in the range from 1 to 500 µm, preferably from 5 to 200 µm, and more preferably from 10 to 100 µm.

5. The process according to any one of claims 1 to 4, **characterized in that** the amount of active biopolymer microbeads, especially polysaccharide microbeads, as dry particles used is from 0,05% to 30% or preferably to 25% or especially to 20,0% by weight based on the dry weight of leather or especially the leather intermediate treated, preferably from 0.5 to 5,0% and more preferably from 1,0% to 3,0 % by weight.

6. The process according to any one of claims 1 to 5, **characterized in that** the composition containing the biopolymer microbeads is (i) an aqueous composition having a solid content of biopolymer, especially polysaccharide and/or polypeptide, microbeads from 0,1 to 30 % or preferably to 25 % or especially to 20 % by weight, more preferably from 1,0 % to 10 % by weight or (ii) a dry composition of polysaccharide particles.

7. The process according to any one of claims 1 to 6, **characterized in that**, if the composition containing the biopolymer microbeads is an aqueous composition, it comprises natural or synthetic thickeners, especially polysaccharides, proteins, polyurethanes or acrylics.

8. The process according to any one of claims 1 to 7, **characterized in that** the composition containing the biopolymer microbeads is (i) an aqueous composition or (ii) a dry composition comprising one or more biopolymer microbeads, especially polysaccharide and/or polypeptide microbeads, of different Dv(90) size, the Dv(90) of the mixture being in the range from 1 to 500 µm, preferably from 5 to 200 µm, more preferably from 10 to 100 µm.

9. The process according to any one of the preceding claims, comprising embedding the biopolymer, especially polysaccharide and/or polypeptide, microbeads in the leather or leather intermediate.

10. The process according to any one of the preceding claims, which, before or in parallel to or after the step of treatment or after pre-treatment with (addition of) the biopolymer microbeads, comprises one or more further process steps selected from the group consisting of fleshing, preservation, curing, soaking, liming, unhairing, splitting, deliming, bating, degreasing, bleaching, pickling and pickling with agents known in the art, respectively, where the process before the addition of the biopolymer microbeads may also comprise splitting and/or defleshing with a device for this purpose; especially the resulting product of a pickling and depickling step or of a tanning step.

11. The process according to any one of the preceding claims wherein the pre-treatment or treatment step comprising addition of the biopolymer microbeads is conducted in a (preferably aqueous) dispersion, followed by a tanning and/or followed by, in parallel to or after a retanning step with a tanning and/or retanning agent selected from the group consisting of mineral tanning agents like one or more chromium agents, one or more aluminium agents, one or more titanium agents and/or one or more zirconium agents; one or more synthetic tanning agents (e.g. aldehydes, such a glutardialdehyde or its precursors, and/or sulfonyl aromatics), one or more vegetable tanning agents, unsaturated oils, one or more polymer retanning agents e.g. based on acrylate copolymers or bio based polymers other than the biopolymer microbeads, one or more softening retanning agents, one or more fatliquoring agents, and one or more dyeing auxiliaries.

12. A process according to any one of the preceding claims, wherein, after tanning and/or retanning, the leather is treated with one or more further additives, especially selected from the group consisting of one or more dyeing agents and one or more fatliquoring agents.

13. The use of a dry or aqueous composition comprising biopolymer microbeads, especially polysaccharide and/or moreover polypeptide microbeads, as defined in any one of claims 1 to 8 for making tanned or re-tanned leather, especially according to a process defined in any one of claims 1 to 12.

14. Leather, especially final leather, obtainable or obtained by a method comprising a process or use according to any one of the preceding claims, especially **characterized in that** it comprises the biopolymer, especially polysaccharide and/or polypeptide, microbeads, in embedded form.

15. Use of a leather according to claim 14 as buffed or full-grain or as split leather for automotive or other land craft related purposes, aircraft, watercraft, furniture, glove, shoe, bag, wallet, suitcase, garment, lining and/or upper leather articles.
